# EUROPÄISCHE PATENTSCHRIFT

(11) **EP 1 261 892 B1**
(45) Veröffentlichungstag und Bekanntmachung des Hinweises auf die Patenterteilung: **16.08.2006**
(21) Anmeldenummer: 01915220.6
(22) Anmeldetag: 10.02.2001
(51) Int. Cl.: G02B 25/00

(54) **LUPE FÜR HAND- ODER BASTELARBEITEN, BEIM LESEN ODER DERGLEICHEN**
MAGNIFYING GLASS FOR NEEDLEWORK, HANDICRAFTS, OR FOR READING OR SIMILAR
LOUPE POUR LES TRAVAUX MANUELS, LA LECTURE ET AUTRES ACTIVITES SEMBLABLES

(30) Priorität: 29.02.2000 DE 10009360
(43) Veröffentlichungstag der Anmeldung: 04.12.2002
(73) Patentinhaber: William Prym GmbH & Co. KG, 52224 Stolberg (DE)
(72) Erfinder: KNIPPING, Klaus, 58762 Altena (DE); RUMP, Heinz-Gerd, 58769 Nachrodt-Wiblingwerde (DE)
(74) Vertreter: Mentzel, Norbert
(86) Internationale Anmeldenummer: PCT/EP2001/001480
(87) Internationale Veröffentlichungsnummer: WO 2001/065298

(56) Entgegenhaltungen:
- DE-B- 1 497 658
- DE-C- 726 352
- US-A- 3 753 611

## Beschreibung

Die Erfindung richtet sich auf eine Lupe der im Oberbegriff des Anspruches 1 angegebenen Art. Um bedarfsweise eine gegenüber der Hauptlinse höhere Vergrößerung nutzen zu können, ist eine kleinere Zusatzlinse mit höherer Vergrößerung an einer außermittigen Stelle an der einen Kreisfläche der Hauptlinse befestigt. Diese Baueinheit aus Hauptlinse und Zusatzlinse soll nachfolgend kurz "Linsen-Kombination" bezeichnet werden.

Bei der bekannten Lupe dieser Art (Firmenschrift Prym: "Universal-Lupe") war die Linsen-Kombination mit dem sie halternden Teil des Gestells starr verbunden. Das Gestell wurde am Körper des Benutzers durch Haltemittel festgelegt, wozu ein schwenkbar am Gestell angeordneter Haken diente. Dieser Haken konnte den Nacken des Benutzers umgreifen. Die Position der Linsen-Kombination konnte gegenüber den Augen des Benutzers durch eine Gelenkverbindung zwischen Gestellteil oder durch Veränderung der Abstützlage des Gestells einerseits und des Hakens am Körper des Benutzers andererseits variiert werden. Abgesehen davon, dass diese Lageänderungen des Gestells mühsam waren, ergaben sich ungünstige Positionen für die Zusatzlinse, die nicht befriedigend durch veränderte Stellungen des Kopfes oder des Werkstücks korrigiert werden konnten.

Es ist bei einem Zweistärkenlupenglas (DE-AS 14 97 658) bekannt, auf einem sphärischen Trägerglas einen segmentförmigen Lupenteil zu befestigen. Dieses Glas ist als Sehhilfe für schwachsichtige Personen gedacht, wobei der Lupenteil in der gewünschten Lage vor dem Auge gehalten wird. Eine Drehung dieser Linsen-Kombination ist weder vorgesehen noch zulässig.

Bei einer bifokalen Lupe anderer Art (DE-OS 21 46 043), die zum Festhalten an einem Auge bestimmt ist, wird neben einer feststehenden, unverdrehbaren Hauptlinse, eine davon getrennte Nebenlinse mit einem exzentrisch zur Hauptachse der Lupe angeordneten Schwerpunkt verwendet. Die Nebenlinse ist unabhängig von der Hauptlinse in einer Innennut der Halterung aufgenommen und kann sich unter der Einwirkung ihres Eigengewichts drehen. Gleichgültig wie man die bifokale Lupe vor das Auge setzt, rollt sich die Nebenlinse vor der Hauptlinse bis ihr Schwerpunkt die tiefste Lage in der Innennut einnimmt. Eine gemeinsame Drehung der Nebenlinse mit der Hauptlinse ist weder vorgesehen, noch sinnvoll.

Bei einer Schutzbrille (US-A-3 544 686) ist es bekannt, Schnappringe, die als Halter für Linsen dienen, in die Brillenöffnung einzusetzen. Um das Einsetzen in die Brillenöffnung zu erleichtern, ist der Schnappring mit einem abragenden Griff versehen. Der einzusetzende Schnappring besitzt in einem ersten Fall eine Vollkreislinse und eine Halbkreislinse, die in zwei getrennten, oder in einer gemeinsamen Innennut des Schnapprings aufgenommen sind. Die Halblinse hat eine andere Vergrößerung als die volle Linse. Zur Lagesicherung der Halbkreislinse im Schnappring besitzt die Innennut radiale Vorsprünge, die eine Drehung der Halblinse im Schnappring verhindern. Alternativ kann eine einzige bifokolare Linse in einer einzelnen Innennut des Sprengrings angeordnet sein, die zwischen den beiden Linsenhälften Einschnitte aufweist. In die Einschnitte greifen radiale Vorsprünge in der Innennut ein und positionieren die bifokulare Linse drehfest im Sprengring.

Der Erfindung liegt die Aufgabe zugrunde, eine preiswerte, zuverlässige Lupe der im Oberbegriff des Anspruches 1 angegeben Art zu entwickeln, die sich bequem den jeweiligen Arbeitsverhältnissen anpassen lässt. Dies wird erfindungsgemäß durch die im Kennzeichen des Anspruches 1 angeführten Maßnahmen erreicht, denen folgende besondere Bedeutung zukommt.

Bei der Linsen-Kombination ist eine Hauptlinse, die einen großen Kreisdurchmesser aufweist, Träger einer kleineren Zusatzlinse, die an einer außenmittigen Stelle an der einen Kreisfläche der Hauptlinse befestigt ist. Der Kreisumfang der Hauptlinse dient zur unmittelbaren Drehlagerung der ganzen Linsen-Kombination im Rahmen eines Gestells, welches im Gebrauchsfall zur Abstützung der Linse an einer Arbeitsfläche oder an der Brust eines Benutzers genutzt wird. So ist eine Innennut im Rahmen über die Hauptlinse ein Gleitdrehlager für die ganze Linsen-Kombination. Zu ihrer Drehverstellung ist an der Hauptlinse eine Drehhandhabe angebracht. Damit lässt sich die Linsen-Kombination in eine Drehstellung bringen, wo die Zusatzlinse in die jeweils gewünschte Position gegenüber dem Werkstück gebracht werden kann. Bei Änderung des Betrachtungswinkels und/oder Lage des Werkstücks kann durch Drehung die dann gewünschte geänderte Stellung der Zusatzlinse nachjustiert werden. Weil die Einstellung der Lupe durch ihre Drehlagerung im Gestell den jeweiligen Arbeitsverhältnissen angepasst werden kann, braucht die Lage des Gestells auf der Unterlage oder an der Abstützstelle des Körpers des Benutzers nicht geändert zu werden. Es ist stets ein optimaler Gebrauch der Lupe möglich.

Weitere Maßnahmen und Vorteile der Erfindung ergeben sich aus den Unteransprüchen, der nachfolgenden Beschreibung und den Zeichnungen. In den Zeichnungen ist die Erfindung in zwei Ausführungsbeispielen dargestellt. Es zeigen:
- Fig. 1: die Ansicht eines ersten Ausführungsbeispiels der erfindungsgemäßen Lupe,
- Fig. 2 bzw. Fig. 3,: in Vergrößerung, Teilquerschnitte durch die Lupe längs der Schnittlinien II - II bzw. III - III von Fig. 1 und
- Fig. 4: in perspektivischer Ansicht eine alternative Ausführung.

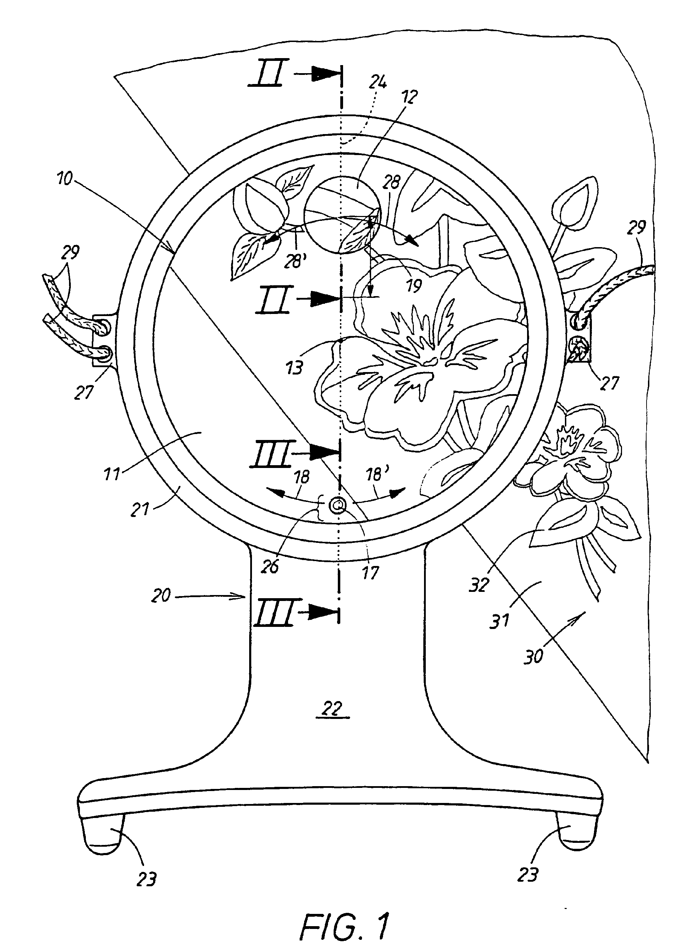

Die Lupe nach der Erfindung besteht aus einer Linsen-Kombination 10, die in einem Gestell 20 drehgelagert ist. Es liegt eine Kombination aus einer großflächigen Hauptlinse 11 und einer kleinen Zusatzlinse 12 vor. Diese beiden Linsen 11. 12 erzeugen für einen Benutzer der Lupe, der ein Werkstück 30 betrachtet, zueinander unterschiedliche Vergrößerungen, wie anhand der Fig. 1 verdeutlicht ist. Dort handelt es sich beim Werkstück 30 um ein textiles Flächengebilde 31, auf welchem Stickarbeiten 32 ausgeführt werden sollen. Die Hauptlinse 11 liefert bereits eine Vergrößerung, z.B. um den Faktor 2. Die Zusatzlinse 12 dagegen liefert eine noch höhere Vergrößerung, z.B. eine 8-fache Vergrößerung.

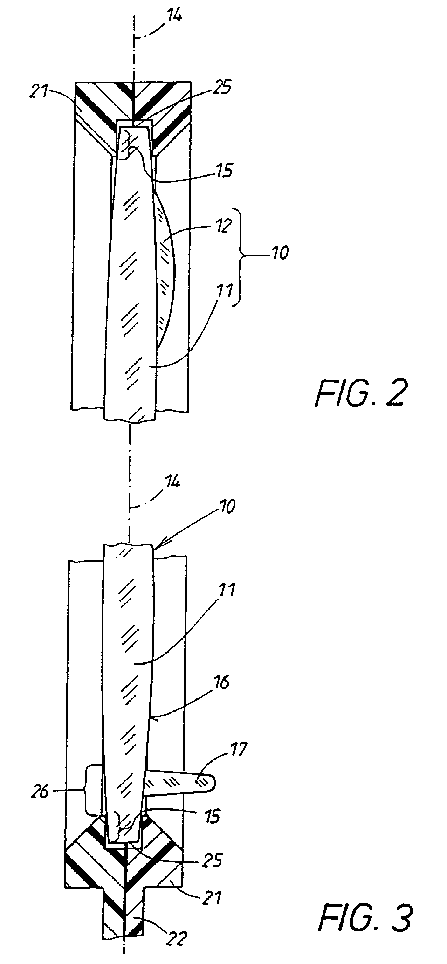

Die Linsen-Kombination 10 ist in einem Gestell 20 gehaltert. Dieses Gestell 20 umfasst einen Lagerrahmen 21, der mit weiteren Gestellteilen 22 und Stützen 23 verbunden ist. Der Lagerrahmen 21 umfasst, wie aus Fig. 2 und 3 zu ersehen ist, den Umfangsrand 25 der Linsen-Kombination 10, wodurch dort ein Gleitdrehlager 25 entsteht. In diesem Fall befindet sich eine Handhabe 17 an der Schauseite 16 der Hauptlinse 11. Diese besteht im vorliegenden Fall aus einem Stift oder Knopf, der bezüglich der strichpunktiert in Fig. 3 angedeuteten Linsenebene 14 absteht und insbesondere im wesentlichen senkrecht dazu verläuft. Über diese Handhabe 17 lässt sich die Linsen-Kombination 10 bezüglich des Gestells 20 im Sinne der Pfeile 18. 18' verdrehen.

Dadurch entsteht eine in der Mitte der Linsen-Kombination 10 liegende Drehachse 13, die senkrecht zu der vorerwähnten Linsenebene 14 verläuft. Der als Handhabe dienende Stift 17 verläuft im wesentlichen parallel dazu, also achsparallel. Die Zusatzlinse 12 ist bezüglich der Drehachse 13 außermittig angeordnet; sie befindet sich in einem aus Fig. 1 mit 19 gekennzeichneten seitlichen Versatz. Beim vorerwähnten Drehen 18, 18' wird folglich die Zusatzlinse 12 sinngemäß in Richtung der Drehpfeile 28, 28' verstellt. Bei gleichem Blickwinkel des Betrachters nimmt dann die Zusatzlinse 12 eine veränderte Drehstellung ein, die eine Betrachtung eines anderen Bereichs des Werkstücks 30 erlaubt. Dabei braucht die Position des Gestells 20 gegenüber dem Betrachter nicht verändert zu werden.

Gepunktet in Fig. 1 ist ein Durchmesser 24, auf welchem sowohl die Zusatzlinse 12 als auch die Handhabe 17 sitzt. Dabei befindet sich die Handhabe 17 bezüglich der Zusatzlinse 12 auf der gegenüberliegenden Seite der Drehachse 13. Um ein hohes Drehmoment zu erlangen, ist die Handhabe 17 in einem Randbereich 26 angeordnet, der sie möglichst nahe an den Lagerrahmen 21 positioniert.

Es versteht sich, dass die Drehhandhabe 17 auch anders ausgebildet sein könnte. Sie könnte an einer definierten Stelle des Gestells 20 sitzen und über ein Drehgetriebe od. dgl. für die Drehbetätigung 28, 28' der Linsen-Kombination 10 im Lagerrahmen 21 sorgen. In diesem Falle wäre die Handhabe ein Drehknopf.

Das Gestell 20 kann in beliebiger Weise ausgebildet sein. Es kann auf einer Unterlage stehend oder hängend am Körper des Benutzers angebracht seien. Letzteres ist im vorliegenden Fall verwirklicht. Das Gestell 20 wird mittels der Stützen 23 am Körper des Betrachters zur Anlage gebracht. Am Umfangsbereich des Lagerrahmens 21 gibt es Angriffsstellen 27 für am Körper des Betrachters angreifende Haltemittel 29. Diese bestehen im vorliegenden Fall aus einer Kordel 29. Die Angriffsstellen sind als diametrale Laschen 27 am Gestell 20 ausgebildet und mit Bohrungen versehen, durch welche die Kordel 29 hindurchgeführt ist. Die Kordel 29 bildet dabei eine Schlaufe, die im Gebrauchsfall die Körperrückseite des Benutzers hintergreift.

Bedarfsweise kann das Gestell 20 mit einer Beleuchtungseinrichtung versehen sein. Es bietet sich an, eine solche Beleuchtungseinrichtung in den Gestellteil 22 und/oder in den Lagerrahmen 21 zu integrieren.

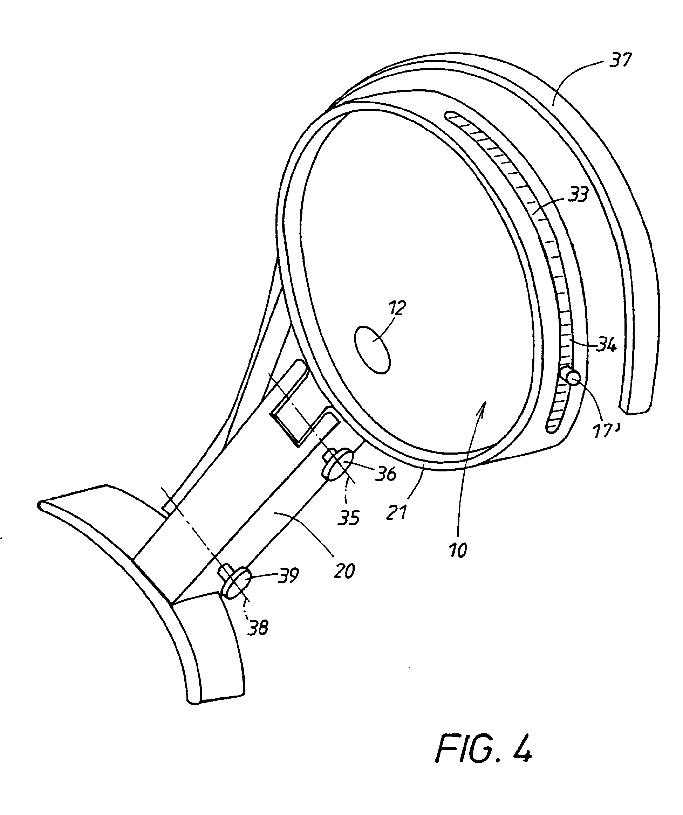

Die in Fig. 4 gezeigte Ausführung hat im wesentlichen den gleichen Aufbau, wie die im vorausgehenden Ausführungsbeispiel gezeigte Lupe. Es braucht ledielich auf die Abweichungen eingegangen zu werden. Im Übrigen gilt die bisherige Beschreibung und die bisherigen Bezugszeichen.

Ein wesentlicher Unterschied besteht darin, dass eine Drehhandhabe 17' nicht mehr achsparallel, sondern radial zur Drehachse der Lupe angeordnet ist. Die Drehhandhabe 17' sitzt an der Peripherie 33 der Linsen-Kombination 10. Sie durchsetzt im vorliegenden Fall einen Schlitz 34 im Lagerrahmen 21, welcher die Drehung der Linsen-Kombination 10 begrenzen kann.

Außerdem ist der Lagerrahmen 21 gegenüber dem Gestell 20 durch eine quer zur Drehachse 13 verlaufende Schwenkachse 35 verbunden, die eine Abwinkelung des Lagerrahmens 21 gegenüber dem Gestell 20 in eine optimale Position erlaubt. Zur Festlegung der gewünschten Winkelstellung vom Lagerrahmen 21 dient ein Feststellmittel 36, wie eine Klemmschraube. Außerdem ist am Gestell 20 ein Bügel 37 an einer weiteren Schwenkachse 38 gelagert, der in verschiedene Positionen zum Gestell bzw. zur Linsen-Kombination 10 überführt werden kann. Eine im Bereich der Achse 38 vorgesehene Fixierung 39 dient zur Lagestabilisierung.

### Bezugszeichenliste :

- 10: Linsen-Kombination
- 11: großflächige Hauptlinse
- 12: kleine Zusatzlinse
- 13: Drehachse von 10
- 14: Linsenebene
- 15: Umfangsrand
- 16: Schauseite von 11
- 17: Handhabe, Stift (Fig. 1-3)
- 17': Handhabe, Stift (Fig. 4)
- 18: Drehbewegungs-Pfeil von 17
- 18': Drehbewegungs-Pfeil von 17
- 19: Versatz von 12 gegenüber 13
- 20: Gestell
- 21: Lagerrahmen an 20
- 22: Gestellteile von 20
- 23: Stütze von 20
- 24: Durchmesser für 12/17
- 25: Gleitdrehlager zwischen 15/21
- 26: Randstück
- 27: Angriffsstelle für 29 / Laschen
- 28: Drehpfeil von 12
- 28': Drehpfeil von 12
- 29: Haltemittel für 20 / Kordel
- 30: Werkstück / Stickarbeit
- 31: textiles Flächengebilde
- 32: Stickarbeiten
- 33: Peripherie von 10 (Fig. 4)
- 34: Schlitz für 17' (Fig. 4)
- 35: Schwenkachse (Fig. 4)
- 36: Feststellmittel (Fig. 4)
- 37: Bügel (Fig. 4)
- 38: Schwenkachse (Fig. 4)
- 39: Fixierung (Fig. 4)

## Patentansprüche

1. Lupe zum Lesen oder für Hand- und Bastelarbeiten, mit einer Linsen-Kombination (10),
bestehend aus einer Hauptlinse (11) mit großem Kreisdurchmesser (24)
und aus einer kleineren Zusatzlinse mit höherer Vergrößerung, die an einer außermittigen Stelle (19) auf der einen Linsenoberfäche (16) der Hauptlinse (11) integriert ist,
und mit einem die Hauptlinse (11) aufnehmenden Rahmen eines Gestells (20), welches so ausgebildet ist, dass es sich im Gebrauchsfall an einer Arbeitsfläche oder an der menschlichen Brust eines Benutzers abstützt,
**dadurch gekennzeichnet ,**
**dass** der Kreisumfang der Hauptlinse (11) und ihr Rahmen (21) ein Gleitdrehlager (25) für die Linsen-Kombination (10) bildet in welchem die Linsen-Kombination (10) drehbar gelagert ist und the Drehachse der Linsen-Kombination (10) senkrecht zu ihrer Linsenebene verläuft,
und **dass** an der Hauptlinse (11) eine Drehhandhabe (17) sitzt, die zur Drehverstellung (18, 28) der Linsen-Kombination (10) dient.

2. Lupe nach Anspruch 1, **dadurch gekennzeichnet, dass** die Drehhandhabe (17) an der Linsen-Kombination (10) befestigt ist.

3. Lupe nach Anspruch 2, **dadurch gekennzeichnet, dass** die Drehhandhabe (17) unmittelbar auf der Schauseite (16) der Hauptlinse (11) sitzt.

4. Lupe nach Anspruch 2 oder 3, **dadurch gekennzeichnet, dass** die Drehhandhabe aus einem Stift (17) besteht, der im Randbereich (26) der Hauptlinse (11) sitzt und der im wesentlichen parallel zur Drehachse (13) der Linsen-Kombination (10) verläuft.

5. Lupe nach Anspruch 2, **dadurch gekennzeichnet, dass** die Drehhandhabe (17') an der Peripherie (33) der Linsenkombination (10) sitzt.

6. Lupe nach Anspruch 5, **dadurch gekennzeichnet, dass** die radial abstehende Drehhandhabe (17') einen Schlitz (34) im Lagerrahmen (21) durchsetzt.

7. Lupe nach einem der Ansprüche 1 bis 6, **dadurch gekennzeichnet, dass** die Drehhandhabe (17) im wesentlichen auf einem durch die Zusatzlinse (12) gehenden Durchmesser (24) der Linsen-Kombination (10) liegt und bezüglich der Zusatzlinse (12) auf der gegenüberliegenden Seite der Drehachse (13) angeordnet ist.

8. Lupe nach einem der Ansprüche 1 bis 7, **dadurch gekennzeichnet, dass** das Gestell (20) im Gebrauchsfall stehend auf einer Unterlage ruht.

9. Lupe nach einem der Ansprüche 1 bis 7, **dadurch gekennzeichnet, dass** das Gestell (20) im Gebrauchsfall hängend am Körper des Benutzers positioniert ist.

10. Lupe nach einem der Ansprüche 1 bis 9, **dadurch gekennzeichnet, dass** in das Gestell (20) eine Beleuchtungseinrichtung für ein Werkstück (30) integriert ist.

## Claims

1. Magnifying glass for reading or for handicrafts or needlework, having a lens combination (10),
consisting of a primary lens (11) with a large circle diameter (24)
and a smaller secondary lens with a higher magnification, which is integrated in an eccentric position (19) on one lens surface (16) of the primary lens (11),
and having a frame member of a frame (20) holding the primary lens (11), which is constructed so that when in use it is supported on a work surface or on the human chest of a user,
**characterised in that**
the circumference of the primary lens (11) and its frame (21) forms a sliding rotary mount (25) for the lens combination (10) in which the lens combination (10) is rotatably mounted and the rotation axis of the lens combination (10) runs perpendicularly to the plane of the lens,
and **in that** on the primary lens (11) there is located a rotary handle (17) which serves to adjust the rotary position (18, 28) of the lens combination (10).

2. Magnifying glass according to claim 1, **characterised in that** the rotary handle (17) is attached to the lens combination (10).

3. Magnifying glass according to claim 2, **characterised in that** the rotary handle (17) is located directly on the viewing side (16) of the primary lens (11).

4. Magnifying glass according to claim 2 or 3, **characterised in that** the rotary handle consists of a pin (17) which is located in the edge region (26) of the primary lens (11) and extends substantially parallel to the rotation axis (13) of the lens combination (10).

5. Magnifying glass according to claim 2, **characterised in that** the rotary handle (17') is located on the periphery (33) of the lens combination (10).

6. Magnifying glass according to claim 5, **characterised in that** the radially projecting rotary handle (17') passes through a slot (34) in the mounting frame (21).

7. Magnifying glass according to one of claims 1 to 6, **characterised in that** the rotary handle (17) is located substantially on a diameter (24) of the lens combination (10) passing through the secondary lens (12) and is mounted on the opposite side of the rotation axis (13) with respect to the secondary lens (12).

8. Magnifying glass according to one of claims 1 to 7, **characterised in that** the frame (20) is positioned in a stationary manner on a support when in use.

9. Magnifying glass according to one of claims 1 to 7, **characterised in that** the frame (20) is positioned to be suspended from the body of the user when in use.

10. Magnifying glass according to one of claims 1 to 9, **characterised in that** an illuminating device for a workpiece (30) is integrated in the frame (20).

## Revendications

1. Loupe pour lecture ou travaux manuels et de bricolage, avec une combinaison de lentilles (10),
composée d'une lentille principale (11) ayant un grand diamètre de cercle (24),
et d'une lentille additionnelle plus petite, ayant un plus fort grossissement, intégrée en un emplacement (19) excentré sur une surface de lentille (16) de la lentille principale (11),
et avec un cadre, recevant la lentille principale (11) d'un bâti (20), qui est réalisé de manière qu'en cas d'utilisation il prenne appui sur une surface de travail, ou sur la poitrine humaine d'un utilisateur,
**caractérisé en ce que**
la circonférence de la lentille principale (11) et de son cadre (21) forme un palier de rotation à glissement (25) pour la combinaison de lentilles (10), dans lequel la combinaison de lentilles (10) est montée à rotation, et l'axe de rotation de la combinaison de lentilles (10) s'étend perpendiculairement par rapport à son plan de lentille
et **en ce que**, sur la lentille principale (11), est montée une manette de rotation (17), servant au réglage par rotation (18, 28) de la combinaison de lentilles (10).

2. Loupe selon la revendication 1, **caractérisée en ce que** la manette de rotation (17) est fixée sur la combinaison de lentilles (10).

3. Loupe selon la revendication 2, **caractérisée en ce que** la manette de rotation (17) est montée directement sur la face visible (16) de la lentille principale (11).

4. Loupe selon la revendication 2 ou 3, **caractérisée en ce que** la manette de rotation est formée d'une tige (17), montée dans la zone de bordure (26) de la lentille principale (11) et s'étendant sensiblement parallèlement à l'axe de rotation (13) de la combinaison de lentilles (10).

5. Loupe selon la revendication 2, **caractérisée en ce que** la manette de rotation (17') est montée sur la périphérie (33) de la combinaison de lentilles (10).

6. Loupe selon la revendication 5, **caractérisée en ce que** la manette de rotation (17') en saillie radialement traverse une fente (34) ménagée dans le cadre de palier (21).

7. Loupe selon l'une des revendications 1 à 6, **caractérisée en ce que** la manette de rotation (17) est placée sensiblement sur un diamètre (24), passant par la lentille additionnelle (12), de la combinaison de lentilles (10), et est disposée sur la face opposée de l'axe de rotation (13) par rapport à lentille additionnelle (12).

8. Loupe selon l'une des revendications 1 à 7, **caractérisée en ce que** le bâti (20), en cas d'utilisation, repose verticalement sur un support.

9. Loupe selon l'une des revendications 1 à 7, **caractérisé en ce que** le bâti (20), en cas d'utilisation, est positionné suspendu au corps de l'utilisateur.

10. Loupe selon l'une des revendications 1 à 9, **caractérisé en ce qu'**un dispositif d'éclairement pour une pièce d'oeuvre (30) est intégré dans le bâti (20).
